# EUROPEAN PATENT APPLICATION

(11) **EP 0 863 678 A2**
(43) Date of publication of application: **09.09.1998**
(21) Application number: 97307140.0
(22) Date of filing: 15.09.1997
(51) Int. Cl.: H04Q 3/00, H04M 3/42

(54) **Method for automatic service provisioning for telecommunications**

(30) Priority: 05.03.1997 US 811980
(71) Applicant: AT&T Corp., New York, NY 10013-2412 (US)
(72) Inventor: Kung, Fen-Chung, Bridgewater, New Jersey 08807 (US)
(74) Representative: Pearce, Anthony Richmond

(57) **Abstract**

A method for automated service provisioning for telecommunications companies. A caller establishes a connection with the company and requests one or more service changes. The caller's voice or DTMF tone information is converted into data compatible with the processors of the automated method. The caller's data is then validated to determine whether the caller is an existing customer entitled to the requested service. Upon proper validation, a service order is automatically generated, and the service order is processed. In some embodiments, a log feature logs the caller's telephone number to enable a subsequent dial back confirming that the order has been executed.

## Description

### Background of the Invention

The present invention relates to the field of telecommunications, and more particularly to automatic service provisioning for telecommunications operations.

While the principles of this invention are equally applicable to modes of telecommunication such as facsimile, E-mail, networking, cellular services, PCS, ISDN utilities, and other telecommunications applications, the invention will be fully understood from the following explanation of its use in the context of telephone services.

A significant population of consumers in this country relies on telecommunications services in their personal and business affairs. For this reason it is not surprising that the average telephone company generates a large number of service orders daily. Service orders, typically generated from customer calls, contain information used to document some specified service to be provided to the calling customer. Service orders further many purposes. They are used, *inter alia*, to establish new customers, to identify service subscribing status, to change or add telephone numbers, to add or delete features (e.g., caller ID, call-waiting, etc.), to initiate or terminate service, and to implement a host of other telecommunications utilities.

In the modem telecommunications industry, service update provisioning is performed using customer service operators to process service requests. For telecommunications companies, the continuous generation of service orders is expensive. This cost factor derives in part from the requirement that a large operation staff be present to receive the calls and to generate the corresponding service orders. The expense created by this effort is naturally passed on to consumers in the form of more expensive telephone service. For at least this reason, the costs associated with a large operation staff is the principal item targeted for reduction by major telecommunications companies such as AT&T.

Efforts to reduce these costs, however, have historically been problematic. For instance, difficulties have arisen where telecommunications companies attempt to combat costs by downsizing service personnel. Where companies reduce their operation staff, customer service suffers. This is particularly true during peak calling hours, where long waiting times frustrate customers and delay the institution of required repairs or other services. Service provisioning in this context is negatively impacted.

Thus at least a two-fold dilemma is presented by a telecommunications company's use of an operations staff for service provisioning. On one hand, decreasing costs by downsizing service personnel reduces the acceptable level of customer service. On the other hand, maintaining an effective level of personnel is often prohibitively expensive for the company.

Although apparent throughout the commercial telecommunications industry, this dilemma is perhaps most severely felt in the arena of local telephone service. There, consumers subscribe directly to a local telephone company which generates service orders for the provision of each subscription. Customer service is necessary not only for processing initial orders, but also for implementing subsequent repairs or changes to local service. In this latter area, the need for a viable solution to controlling costs while maintaining customer service has become paramount in recent years.

Service provisioning methods exist in the art which are partially automated in that these methods provide for a marginal degree of automation such as voice-to-data conversion. A staff of human personnel, however, is always required to process and implement the service requests. For example, existing methods necessitate the use of human personnel to generate the service orders corresponding to the requested service change. Unfortunately, service order generation accounts for the majority of processing time involved in service provisioning. Thus, with existing methods, companies must employ a full operations staff to process and implement the most complex aspect of customer service. Such a setup undercuts the cost savings otherwise achieved by a reduction in human personnel. In sum, the numerous shortcomings associated with existing service provisioning methods are incompatible with substantial cost savings and effective customer service.

Moreover, existing systems severely restrict customer flexibility. The customer must rely on human personnel to implement even the most rudimentary service-based needs. For example, where a customer wishes to have her telephone service changed to add a call-waiting feature on her existing number, she cannot do so via an automated method. Instead, she must always interface with human personnel, even for the most routine service request. For the customer, the result is often a significant holding time on the line until a customer assistant is available to process her request. For the telephone company, the customer service dilemma persists. Inasmuch as the company employs a substantial staff of service personnel to field routine service requests, cost considerations are once again at the forefront. Clearly a new method for service provisioning would be highly desirable to overcome the numerous practical disadvantages of existing methods.

It is therefore an object of this invention to provide for a fully automated service provisioning method for telecommunications companies.

It is further an object of the invention to provide an automated service provisioning method which is substantially more efficient than existing methods.

Another object of the invention is to provide such a method which is capable of performing a wide range of customer-based service operations.

Another object of the invention is to provide such a method which can eliminate the need for a large operation staff to constantly monitor phone calls from customers whose needs can be more efficiently, expediently, and reliably fulfilled by automated service provisioning.

Another object of the invention is to provide a service provisioning method which can be fully integrated to accommodate service order formats of a plurality of service providers.

Still another object of the invention is to support telecommunications customer movement and other services which enable a customer to rely on expedient self-provisioning to move from one physical location to another.

Yet another object of the invention is to provide a method for telecommunications service operations that provides service maintenance to customers through the storage and preservation of service orders.

### Summary of the Invention

These and other objects of the invention are accomplished in accordance with the principles of the invention by providing methods for service provisioning and maintenance which are fully automated and which support a virtually unlimited variety of service requests. By providing automated and reliable methods for performing service updates within existing telecommunications systems, the invention replaces the old methods and expenses of requiring a substantial operations staff to perform customer service functions. Pursuant to the invention, an existing customer calls a telecommunications company and makes one or more service requests. Upon connection and after the customer's DTMF tone or voice data is input, the DTMF tone or voice is converted into data using a voice-data conversion step. The received customer data is then validated. If the caller is identified as an existing customer entitled to receive the requested service, the method automatically generates a service order pertaining to the received service request. The service order is generated using a format compatible with the customer's particular service provider. The service order is then processed and the requested service is implemented. In some embodiments, the method provides a logging feature which automatically logs a caller's telephone number for the purpose of dialing back the customer to confirm the status of the requested service. The method is repeated for any multiple number of customer service requests until the customer completes her call. Also, in some embodiments, the service order process updates the subscriber 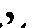 s profile information to accommodate future service requests.

From the above method of automatic service provisioning, numerous embodiments and variations may be contemplated. These embodiments and variations remain within the spirit and scope of the invention. Still further features of the invention and various advantages will be more apparent from the accompanying drawings and the following detailed description of the invention.

### Detailed Description of the Drawings

FIG. 1 shows an illustrative diagram of the general sequence of events of a method in accordance with the present invention.

FIG. 2 shows a flow chart of an exemplary embodiment of a method in accordance with the present invention.

### Detailed Description of the Invention

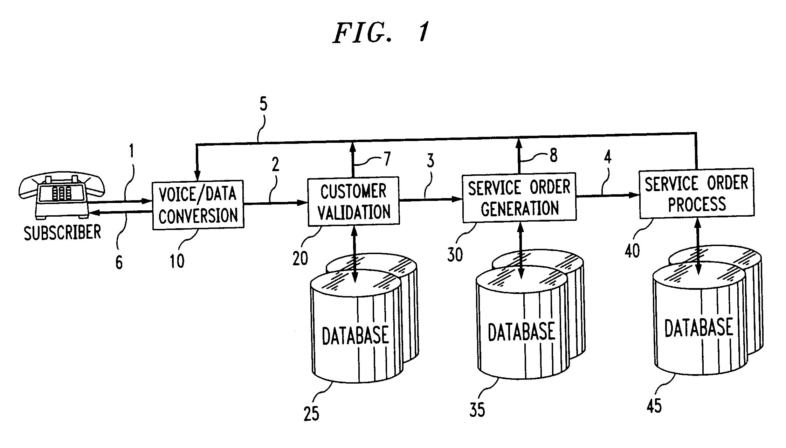

FIG. 1 illustrates the general sequence of events comprising a method for automatic service provisioning according to the invention. While the present illustration describes the method in the context of an existing subscriber implementing an update to his telephone service, the method can be equally applied to other modes of telecommunication. A subscriber desires to implement some change to his existing telephone service. The subscriber dials the telephone number of the telephone company's service center. A connection, represented by data paths 1 and 6, is thereby established between the subscriber and the service center. This connection is more specifically established between the subscriber and a voice-data conversion element, represented by box 10. For the purposes of this application, the term "element" generally refers to the software and/or physical components which are necessarily associated with, and which provide the functionality for, a corresponding step of the invention. In response to oral prompts, the subscriber provides certain information such as the subscriber's telephone number and the nature of the service update(s) desired. The subscriber's input may either be voice or DTMF (touch) tone. The purpose of the voice-data conversion step 10 is to transform the subscriber's voice or DTMF tone input into data streams which are understood by the processors implementing the automated method.

Thus, the voice-data conversion step 10 converts this input information into data compatible for further processing in subsequent steps. The physical and functional details of the voice-data conversion element 10 are known in the art and, as such, are not critical to an understanding of the claimed method.

Following the voice-data conversion step 10, the converted data stream is next received by an element called customer validation, depicted graphically as box 20. The conceptual flow of data from the voice-data conversion element 10 into the customer validation element 20 is represented by data path 2. The purpose of the customer validation step 20 is to restrict the automated provision of services to those customers who already have telephone service. That is, only those customers that are already a customer of the telephone company are permitted to use self-provisioning. The customer validation step 20 also determines, based on a customer profile contained in database 25, whether the requested service change is available to the customer, or whether other factors (like the customer's credit, type of service, etc.) preclude the customer's entitlement to the requested service. For example, the customer validation step 20 accesses database 25 to evaluate the customer's profile. The customer profile typically contains information such as the location of the subscriber, the type of service used by the subscriber, the quality of the subscriber's credit, service location, availability of service, equipment type, current telephone number, service history, and other information pertinent to the subscriber's request. If the customer validation step 20 determines that, for whatever reason, the subscriber is not entitled to the requested service, it sends a suitable error message back to the subscriber. This error message is transmitted back to the voice-data conversion step 10 via data paths 7 and 5. The voice-data conversion step 10 converts the electronic data comprising the error message into voice data for communication to the subscriber over data path 6.

The customer validation step 20 may be implemented using any known method. Typically, customer validation is implemented using a software routine (or set of routines), together with one or more suitable microprocessors along with peripheral circuitry to execute the routine(s). In some embodiments, the customer validation information is contained within the same database as the information pertaining to service order generation (see below). In other embodiments, the databases are distinct.

If the search reveals that the customer has a preexisting account with the service provider and that the subscriber is otherwise entitled to the changes, the service update process proceeds to the next step. The customer validation element 20 forwards the pertinent customer data to the service order generation step 30. The conceptual data flow from element 20 to element 30 is graphically represented by data path 3.

The service order generation step 30 typically comprises the majority of the computer processing involved in the self-provisioning routine. The service order generation step 30 generates a service order. The service order is generated pursuant to the information transmitted by the subscriber, as well as the information in the customer's profile and the format description defined for the service order generation step 30. The format of the service order depends in part on the identity of the subscriber's service provider. At the time of the filing of this application, the inventor is aware of seven Regional Bell Operating Companies (RBOCS), including AT&T, GDE, and MCI. Each of these companies may use service orders having a unique format. In addition, these and other telecommunications companies may use other forwarding service providers. Telecommunications companies also may enter into business relationships with foreign companies, and therefore may use foreign service providers. Formats associated with a particular service provider, or with a variety of service providers, are stored in a database 35. Using the subscriber's identity and/or other subscriber information, service generation step 30 accesses database 35 to read the proper format to be used for the service order. Specifically, the service order generation step 30 considers the service order mapping contained in database 35 that is associated with the subscriber's service provider. Thereupon, the service order generation step 30 creates a service order using the format identified to be compatible with the subscriber's service provider. Advantageously, regardless of the service provider, the format of the service order always conforms to parameters required by that provider.

Once the service order generation step 30 generates an appropriate service order, the service order is transmitted via data path 4 to the service order process step 40. The function of the service order process step 40 is to access all necessary databases and operations systems to facilitate the physical implementation of the service changes as decreed by the terms of the service order.

During the execution of service order process step 40, a status confirmation message may be transmitted back to the voice data conversion step 10, via data path 5. The voice data conversion step 10 translates the message into voice, which is communicated to the subscriber over the telephone connection via data path 6. This message informs the subscriber that the requested service has been approved and will be completed. In addition, in a preferred embodiment the service order process will update the subscriber profile in database 25, which can in turn be used for customer validations associated with future service requests.

In addition to, or in lieu of, the status confirmation message described above, the method may also perform an automated dial back. This step involves an automatic telephone call to the subscriber which occurs after the service request has been successfully performed. The dial back confirms the successful completion of the service update to the subscriber. The dial back step uses the telephone number stored in the logging step (see below) to call back the customer.

For simplicity, the connections between the foregoing steps have been described generally as discrete data paths. It will be evident to those skilled in the art, however, that these data paths are intended to describe the conceptual relationships between steps of the invention, and not necessarily specific physical connections. Moreover, in some embodiments, the data paths of FIG. 1 do not always require the physical propagation of data from one location to another. In those instances, the data paths in FIG. 1 are intended merely to clarify the order in which the various steps occur. As an illustration, in some embodiments the output of the voice-data conversion element 10 does not physically propagate to a second location for customer validation. Instead, in these embodiments, the customer validation step 20 is implemented using processors which read data from predetermined memory locations where the converted customer data is stored.

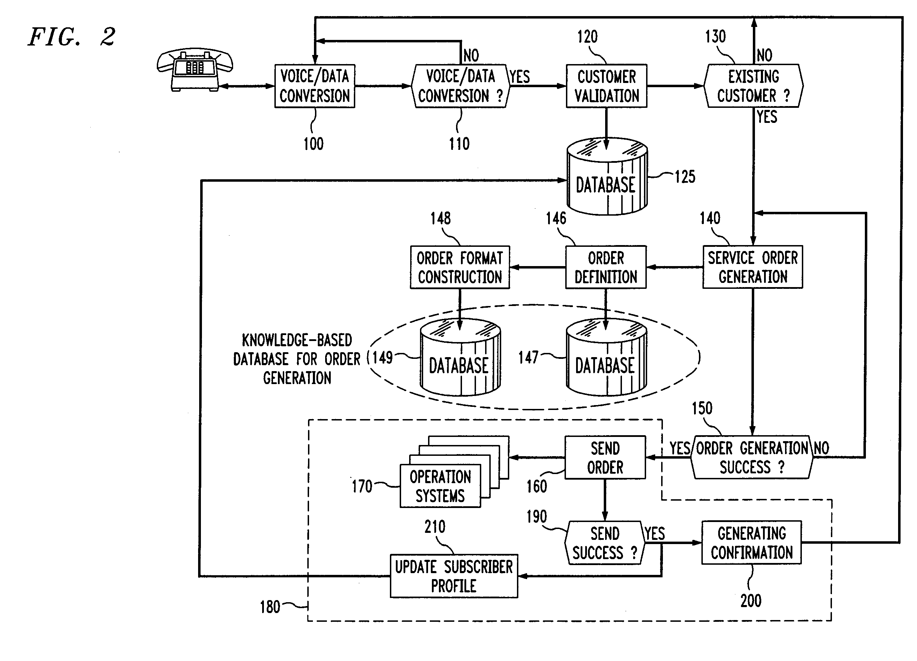

FIG. 2 depicts a flow chart which more fully illustrates a self-provisioning method in accordance with the invention. As before, the subscriber dials the customer service center to request one or more service changes. Upon dialing, the subscriber is connected to the voice-data conversion element 100. The voice-data conversion element emits voice patterns which prompt the subscriber to input certain information. The subscriber supplies his or her current telephone number, and other information pertinent to the subscriber's identity, using either voice or DTMF tone. The subscriber's voice or touch tone input is converted into data, as shown by steps 100 and 110. This data may comprise any suitable form which is understood by the processor components earmarked to implement the service provisioning method. In some embodiments, the voice-data conversion step 100 includes a log facility (not shown). The log facility is used to store the subscriber's telephone number, thereby enabling a dial-back capability for subsequent service confirmation.

After the information supplied by the subscriber has been converted into data form, the data is processed by the customer validation step 120. Using this data, the customer validation step 120 accesses subscriber database 125 to verify the subscriber's status as a preexisting customer, and to otherwise validate the subscriber's entitlement to the requested service. In a manner previously described, the validation step 120 determines whether the subscriber is an existing customer (see block 130). If not, an appropriate error message is sent back to the voice-data conversion step 100, which is then communicated in voice to the subscriber. If so, the subscriber's data is next processed by the service order generation step 140.

In a preferred embodiment of the invention, the service order generation step 140 generates a service order based on: (1) the data supplied by the subscriber specifying the particular service(s) requested; (2) system information which defines the particular order necessary to implement the requested service; and (3) the format of the service order (unique to the service provider). With respect to point (1), the service order generation step 140 obtains this information from the customer (see steps 100 and 120). With respect to points (2) and (3), the service order generation step 140 accesses one or more knowledge-based databases to read the necessary information. In the preferred embodiment shown in FIG. 2, the service order generation step can be broken down into two sub-steps, i.e., order definition sub-step 146 and order format construction sub-step 148. In the order definition sub-step 146, the service order generation step 140 accesses database 147. Based on the information input by the subscriber which details the subscriber's particular service request, the order definition sub-step 146 reads a corresponding service order definition from database 147. The service order generation step 140 will use this information for generating a properly-defined service order. Next, in the order format construction sub-step 148, the service order generation step 140 uses the subscriber's input information to read from database 149 the appropriate format for the service order. In a preferred embodiment, database 148 is a generic order mapping database which contains information relating to the specific format of the subscriber's service provider. Then, using the information obtained from databases 147 and 149, service order generation step 140 generates a service order.

In the illustration of FIG. 2, the respective definitional and format data were stored in two separate databases 147 and 149. In other embodiments, this information is all contained within a single database. Alternatively, service order generation step 140 may extract information from more than two databases. In still other embodiments, the customer profile information contained in database 125 instead resides in one or more of the databases used in the service order generation step 140. Stated differently, the invention does not depend on the specific manner in which the databases are implemented.

In some embodiments, service order generation step 140 writes the generated service order into a database 147 or 149, or another designated database. This information is used for the maintenance of customer information and for automated record-keeping.

If the system determines that the service order generation step 140 has successfully created a service order (see block 150), the service order will be transmitted to the service order process 180. More specifically, as shown in blocks 160 and 170, service order process step 180 will invoke all necessary operation systems 170 across the telecommunications network to implement the requested service. This step includes the assignment of necessary service-based tasks to various machines, and, in some cases, the activation of circuit elements necessary to physically implement the requested changes.

To support service order process 180, many operation systems exist in the art. As such, the components involved in the service order process 180 will vary as each service provider's equipment is generally different. The service order process is complex. Fortunately, the physical and functional details of the process are not critical to an understanding of the invention as any existing service order implementation method will suffice for service order process step 180. The invention therefore contemplates that the hardware, software, and network components comprising service order process element 180 will vary depending on, *inter alia,* the telecommunications company and the subscriber's particular service provider.

In some embodiments, the method automatically inspects the results of the service order process 180 to determine whether the service update is successful. Once the service information is successfully transmitted to the appropriate devices on the network for implementing the service request, the service order process step 180 generates a service confirmation message, as shown in block 200. This message is transmitted back to the voice-data conversion element 100 for conversion into voice which, in turn, is communicated to the subscriber. Typically, this message will inform the subscriber that a service order outlining the subscriber's requests has been successfully generated and that the implementation of that order is under way. Preferably, the message will also provide the date and time that the requested changes will be effected. In other embodiments where the requested change is capable of prompt implementation, the service order process 180 will update the subscriber profile in database 125 with the new information relating to the changes to the subscriber's service, as shown in block 210. This updated subscriber information may be used by the customer validation process 120 for future service requests. Also, the service order process will send a message to the voice-data conversion step 100 that the requested service has been successfully implemented. In still other embodiments, the method will use the log information (see above) to automatically dial back the subscriber when the service is completed. In these embodiments, the method confirms to the customer that the requested service has been successfully implemented. A combination of the foregoing confirmation features may likewise be contemplated.

Pursuant to the invention, customers may expediently move from one physical location to another. Customer movement allowance is achieved in that the customer's telephone number can be automatically updated upon customer initiation. The service order for the telephone number change is automatically generated and confirmed to the customer, which greatly speeds customer service response time. As such, the present method advantageously provides for greater customer satisfaction.

With the invention, the subscribing customer can rely on one-dial service to update the customer's service changes. No operation staff is needed to perform these operations, and service orders are automatically generated. Moreover, in a preferred embodiment, the method advantageously tracks all service orders for existing customers, thereby preserving all customer status information. Additionally, the method can be designed to support a virtually unlimited variety of service requests, including without limitation adding new telephone numbers, removing existing telephone numbers, adding new service features, removing existing service features, changing existing service providers, changing billing information, and dropping service altogether.

It will be understood that the foregoing is merely illustrative of the principles of the invention, and that various modifications and variations can be made by those skilled in the art without departing from the scope and spirit of the invention. The claims appended hereto are intended to encompass all such modifications and variations.

## Claims

1. An automated method for service provisioning by a telecommunications company, comprising the steps of:
receiving a call for a service request and establishing an automated connection with the caller;
converting, in response to voice or DTMF input identifying the caller, the caller's voice or DTMF input into data input;
validating, based on the data input, the caller's status as a customer;
generating, only if said validating step establishes that the caller is a customer, a service order documenting the service request; and
processing the service order by executing the service request specified therein.

2. The method according to claim 1, wherein said validating step further comprises the step of:
searching, based on the data input, a database for customer profile information establishing the caller's status as a customer.

3. The method according to claim 2, wherein said processing step further comprises the step of:
updating, after generating the service order, the customer profile information in the database.

4. The method of claim 1 wherein the data input comprises the caller's telephone number.

5. The method of claim 4, further comprising the step of:
logging the caller's telephone number, said logging step used to enable a subsequent dial back to the caller.

6. The method of claim 1, wherein said generating step further comprises the steps of:
reading, from one or more databases based on the data input, format data corresponding to the caller's service provider; and
using the data input and the format data to create the service order.

7. The method of claim 1, wherein said processing step further comprises the step of:
transmitting the service order to operations systems necessary to implement the service request.

8. The method of claim 1, further comprising the step of:
storing the data input into a database for maintaining the caller's records.

9. A method for automatically generating and processing a service order in response to a customer call to a telecommunications company, comprising the steps of:
establishing, upon receiving a call from a caller, an automated connection with the caller;
prompting the caller to transmit voice or DTMF tone data corresponding to the caller's identification and one or more desired service requests;
converting voice or DTMF tone data received from the caller to digital data compatible for processing;
validating each service request by locating in memory data corresponding to the caller's identification;
generating, only upon proper validation, a service order for each service request; and
processing each service order by transmitting each order to necessary operations systems for execution of each service order.

10. The method of claim 9, further comprising the step of:
logging the digital data for performing a dial back to confirm the execution of the service order.

11. A method for automatically generating a service order for telecommunications operations upon customer initiation, comprising the steps of:
receiving a call from a customer indicating a request to change existing telecommunications service;
connecting the call to a converter for converting the service request into a data format;
validating the request using a validation database which contains existing customer information;
generating a service order from the service request upon successful validation of the request;
accessing all necessary databases to change existing telecommunications service for the customer based on the service order; and
updating the existing customer information in the validation database.

12. The method of claim 11, wherein the converted data comprises the caller's telephone number.

13. The method of claim 12, further comprising the step of:
logging the customer's telephone number for performing a dial back to confirm successful execution of the service order.

14. The method of claim 13, further comprising the step of:
performing a dial back to confirm successful execution of the service order.

15. A method for automated service provisioning for a telephone company, comprising the steps of:
receiving a service request from a caller and establishing a connection with the caller;
receiving voice input or DTMF tone input from the caller over the connection, the voice input or DTMF tone input comprising the telephone number of the caller and one or more requests to update telephone service;
converting the voice input or DTMF tone input into digital data compatible with processors used to perform said automated service provisioning method;
validating, using the telephone number in the digital data, the status of the caller as a customer;
generating, upon proper validation of the caller as a customer, one or more service orders responsive to each of the one or more service requests; and
executing each of the one or more requests by transmitting the one or more service orders to all necessary operations systems.

16. The method of claim 15, wherein said generating step further comprises the steps of:
accessing a first database to determine the format for the service order to be generated; and
accessing a second database to determine the definition of the service order to be generated.
